# EUROPEAN PATENT APPLICATION

(11) **EP 4 722 877 A1**
(43) Date of publication of application: **08.04.2026**
(21) Application number: 25202638.0
(22) Date of filing: 17.09.2025
(51) Int. Cl.: G06F 3/0482

(54) **INFORMATION PROCESSING SYSTEM, INFORMATION PROCESSING METHOD, AND PROGRAM**

(30) Priority: 24.09.2024 JP 2024164763
(71) Applicant: Rakuten Group, Inc., Setagaya-ku Tokyo 158-0094 (JP)
(72) Inventor: ALI, Tuba, Minato-ku, Tokyo, 108-0075 (JP)
(74) Representative: Hoffmann Eitle

(57) **Abstract**

At least one processor executes displaying an icon associated with at least one function in a first display area of a display area in an app that provides the at least one function, an image being displayable in the display area, acquiring a usage status of the at least one function, and displaying, based on the usage status of the at least one function, a usage status image in a second display area of the display area, the usage status image being related to the usage status of the at least one function, and the icon being not displayed in the second display area.

## Description

### BACKGROUND

### 1. Field

The present disclosure relates to an information processing system, an information processing method, and a program.

### 2. Description of Related Art

Japanese Patent No. 7481567 discloses an example of an information processing system that displays icons corresponding to top-ranked mini apps based on mini app usage status (e.g., the total sales of products or services and the number of times each app has been selected by a user).

However, while such an information processing system displays icons according to mini app usage status, it remains difficult to accurately identify the actual usage statuses of the mini apps. As a result, usability has been reduced.

### SUMMARY

This Summary is provided to introduce a selection of concepts in a simplified form that are further described below in the Detailed Description. This Summary is not intended to identify key characteristics or essential characteristics of the claimed subject matter, nor is it intended to be used as an aid in determining the scope of the claimed subject matter.

An information processing system according to the present disclosure includes at least one memory configured to store a program and at least one processor configured to run the program to execute a process. The at least one processor is configured to execute displaying an icon associated with at least one function in a first display area of a display area in an app that provides the at least one function, an image being displayable in the display area, acquiring a usage status of the at least one function, and displaying, based on the usage status of the at least one function, a usage status image in a second display area of the display area, the usage status image being related to the usage status of the at least one function, and the icon being not displayed in the second display area.

An information processing method according to the present disclosure includes displaying, by at least one processor, an icon associated with at least one function in a first display area of a display area in an app that provides the at least one function, an image being displayable in the display area, acquiring, by the at least one processor, a usage status of the at least one function, and displaying, by the at least one processor, based on the usage status of the at least one function, a usage status image in a second display area of the display area, the usage status image being related to the usage status of the at least one function, and the icon being not displayed in the second display area.

A program according to the present disclosure is configured to cause at least one processor to execute displaying an icon associated with at least one function in a first display area of a display area in an app that provides the at least one function, an image being displayable in the display area, acquiring a usage status of the at least one function, and displaying based on the usage status of the at least one function, a usage status image in a second display area of the display area, the usage status image being related to the usage status of the at least one function, and the icon being not displayed in the second display area.

Other features and aspects will be apparent from the following detailed description, the drawings, and the claims.

### BRIEF DESCRIPTION OF THE DRAWINGS

Fig. 1 is a diagram illustrating an overall configuration of an information processing system according to a first embodiment.
Fig. 2 is a table illustrating a user management database in the first embodiment.
Fig. 3 is a table illustrating a usage status database according to the first embodiment.
Fig. 4 is an illustration of the displayed content provided by the display device of the first embodiment.
Fig. 5 is a flowchart illustrating an app display control process of the first embodiment.
Fig. 6 is an illustration of the displayed content provided by the display device according to a second embodiment.
Fig. 7 is an illustration of the displayed content provided by the display device according to a third embodiment.
Fig. 8 is an illustration of the displayed content provided by the display device according to a fourth embodiment.
Fig. 9 is an illustration of the displayed content provided by the display device according to a fifth embodiment.
Fig. 10 is an illustration of the displayed content provided by the display device according to the fifth embodiment.
Fig. 11 is an illustration of the displayed content provided by the display device according to a sixth embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

An information processing system, an information processing method, and a program according to a first embodiment will now be described.

### Configuration of Information Processing System 10

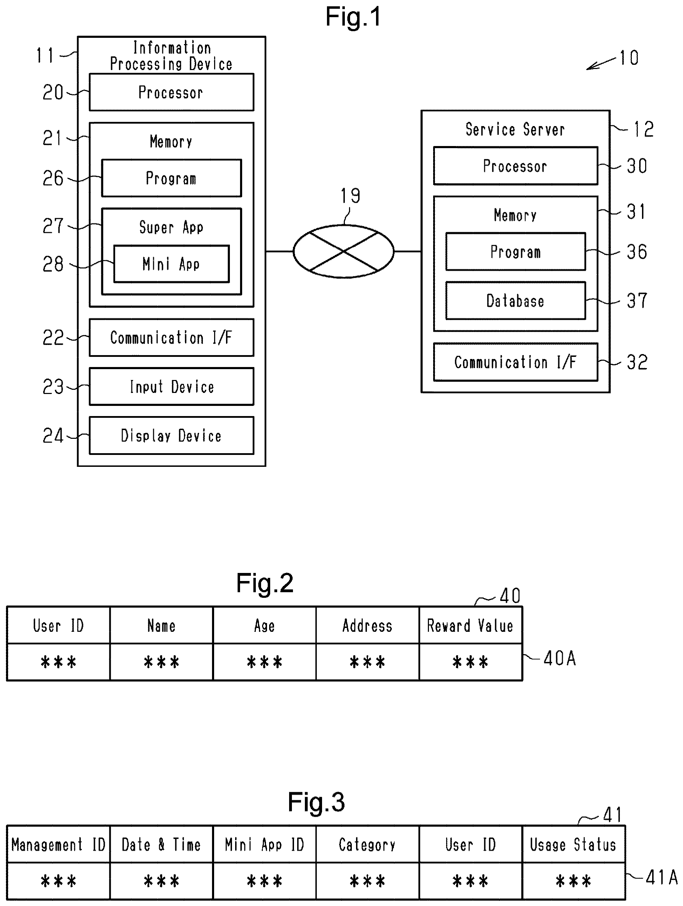

Referring to Fig. 1, an information processing system 10 is configured to provide information to a user. In particular, the information processing system 10 is configured to provide various services to a user via an application (hereinafter simply referred to as an app).

The information processing system 10 includes an information processing device 11. The information processing device 11 may be a terminal device used by a user. The information processing device 11 may be a mobile terminal device that can be carried by a user. A user uses various services.

The information processing system 10 may include a service server 12. The service server 12 is configured to provide various services to a user. The service server 12 is managed by an operator of the information processing system 10.

The information processing device 11 and the service server 12 may communicate with each other via a network 19. Hereinafter, the communication between the information processing device 11 and the service server 12 via the network 19 will not be described.

### Configuration of Information Processing Device 11

The information processing device 11 may include at least one computer. The information processing device 11 includes at least one processor 20 and at least one memory 21. The information processing device 11 includes a communication interface 22, an input device 23, and a display device 24. In the diagram, the interface is indicated as I/F.

The processor 20 is configured to control the information processing device 11. The processor 20 is configured to execute processing based on a program 26 stored in the memory 21. The processor 20 may be a central processing unit (CPU), a graphic processing unit (GPU), or a neural network processing unit (NPU). The processor 20 may include, or may itself be, an integrated circuit, such as an application-specific integrated circuit (ASIC). The processor 20 may be any combination thereof.

The memory 21 is configured to store the program 26. The memory 21 is a non-transitory computer-readable medium that stores the program 26, and may include a transitory computer-readable medium. The program 26 may include a dedicated app for using the information processing system 10.

The memory 21 may be configured to store a super app 27 and a mini app 28 as apps. The memory 21 may be configured to store at least one super app 27 and at least one mini app 28.

The super app 27 is an integrated app having at least one function (service). The super app 27 serves as a platform of the mini app 28. That is, the super app 27 provides the mini app 28. The super app 27 is also referred to as a parent app. For example, providing the mini app 28 may include launching the mini app 28, or may include displaying an additional area for running the mini app 28 (e.g., an area for a widget).

The mini app 28 runs on the super app 27 as a platform. The mini app 28 is developed to run in the super app 27. The mini app 28 is also referred to as a child app.

The app may include an app that is preinstalled in the memory 21 in advance, or may include a native app, a web app, or the like that is installed in the memory 21 from outside by a user's operation. The native app is installed from an app store. The web app runs in a browser. The user uses a service provided via an app by operating the app. The program 26 may include an app.

The communication interface 22 is implemented as hardware, software, or a combination thereof. The communication interface 22 sends and receives data to and from the service server 12.

The input device 23 is configured to input data in response to a user's operation. The input device 23 may be a touch panel integrated with the display device 24. The input device 23 may be a pointing device having operation buttons. The display device 24 displays information in accordance with output instructions from the processor 20.

### Configuration of Service Server 12

The service server 12 may be implemented by at least one computer. The service server 12 includes at least one processor 30 and at least one memory 31. The service server 12 may include a communication interface 32.

The memory 31 is configured to store the program 36. The memory 31 is a non-transitory computer-readable medium that stores the program 36, and may include a transitory computer-readable medium. The memory 31 is configured to store a database 37.

The communication interface 32 sends and receives data to and from the information processing device 11. The service server 12 may include an input device that receives data, or may include a display device that displays information.

The service server 12 has the same configuration as the information processing device 11. Thus, the processor 30, the memory 31, and the communication interface 32 of the service server 12 will not be described.

The service server 12 may provide the user with, for example, a predetermined service that allows for a transaction with a transaction target. The predetermined service may include at least one of a payment service, an electronic commerce service, a travel reservation service, a restaurant reservation service, a communication service, a video streaming service, and an electronic book distribution service. Examples of the transaction target include a product and a service. Examples of the transaction include purchase, selling, lending, use, and reservation.

Providing the predetermined service may include, for example, launching an app capable of sending and receiving a request and a response related to the predetermined service. Providing the predetermined service may include, for example, displaying an additional area for a widget or the like capable of sending and receiving a request and a response related to the predetermined service. Providing the predetermined service may include, for example, launching a web browser and transitioning to a webpage capable of sending and receiving a request and a response related to the predetermined service.

The service server 12 may have a reward granting function. A reward may be a point available in the predetermined service. A reward may be a point that can be acquired in the predetermined service. A reward value may be the number of points. A reward may be available across multiple services managed by the same manager or across multiple services each managed by a different manager. A reward may be an incentive for the user.

### Data Configuration of Database 37

As shown in Fig. 2, the memory 31 of the service server 12 stores a user management database 40 as the database 37. The database 37 includes the user management database 40. The user management database 40 is used to manage data related to users who use the information processing system 10.

The user management database 40 includes at least one dataset 40A. In the dataset 40A, a user identifier is associated with a name, an age, an address, and a reward value. In the diagram, identifiers are indicated as IDs.

The user identifier is data used to identify a user. The reward value is possessed by the user. The reward value may include a limited-time reward value for which a validity period is set and an unlimited-time reward value for which no validity period is set.

As shown in Fig. 3, the memory 31 of the service server 12 stores a usage status database 41 as the database 37. The database 37 includes the usage status database 41. The usage status database 41 indicates a usage status of the mini app 28 used by the user.

The usage status database 41 includes at least one dataset 41A. In the dataset 41A, a management identifier is associated with a date and time, a mini app identifier, a category, a user identifier, and a usage status.

The management identifier is data used to identify the dataset 41A. The date and time indicates when the mini app 28 was used. The mini app identifier is data used to identify the mini app 28. The category indicates a category of the mini app 28. The category includes at least a first category and a second category. Examples of the category may include at least one of food, lifestyle, sports, shopping, finance, and insurance.

The usage status is data indicating the usage status of the mini app 28. The usage status includes a usage history of the mini app 28 used by the user. Examples of the usage status include launch of the mini app 28, browsing of the mini app 28, contract establishment via the mini app 28, a usage reward value, and an acquired reward value. The contract establishment includes the establishment of a contract related to the transaction of a transaction target. The usage reward value is used by the user for the contract establishment via the mini app 28. The acquired reward value is acquired by the user as a result of the contract establishment via the mini app 28.

In the service server 12, the processor 30 receives data related to the use of the mini app 28 from the information processing device 11 and stores the dataset 41A in the usage status database 41.

The processor 30 is configured to acquire the usage history of the mini app 28 by the user based on the usage status database 41. The processor 30 is configured to acquire the usage status of the mini app 28 based on the acquired usage history.

The processor 30 is configured to calculate the usage frequency of the mini app 28 by the user based on the acquired usage history. In this manner, the usage status includes the usage frequency of the mini app 28 by the user.

For example, the processor 30 is configured to acquire, as the usage frequency of the mini app 28, the number of times the mini app 28 has been used by the user in a predetermined period from the present. Examples of the predetermined period include one day, one week, half a month, one month, three months, and one year. The processor 30 is configured to acquire, as the usage frequency of the mini app 28 in chronological order, the number of times the mini app 28 has been used by the user for each of multiple predetermined periods from the present. The number of times the mini app 28 has been used is the number of times the mini app 28 has been launched. Instead, the number of times the mini app 28 may be the number of views of the mini app 28, the number of agreements made via the mini app 28, or may be a combination thereof.

The processor 30 is configured to acquire a changed status of the reward value resulting from the use of the mini app 28 by the user, based on the acquired usage history. In this manner, the usage status includes a changed status of the reward value resulting from the use of the mini app 28 by the user.

For example, the processor 30 is configured to acquire, as the changed status of the reward value, a usage reward value used by the user using the mini app 28 and an acquired reward value acquired by the user using the mini app 28. The processor 30 is configured to acquire, as the changed status of the reward value, the usage reward value and the acquired reward value in a predetermined period from the present. The processor 30 is configured to acquire, as the changed status of the reward value, the usage reward value and the acquired reward value in each of multiple predetermined periods from the present.

The processor 30 may use the acquired usage history to calculate the number of times the mini app 28 assigned to each category has been used. In this case, the processor 30 may use the calculation result to determine a usage ranking of categories. The usage ranking of categories is a ranking of the number of times the mini app 28 has been by the user for each category.

In the service server 12, when a transmission condition is satisfied, the processor 30 transmits the usage status of the mini app 28 by a user to the information processing device 11. The transmission condition may be satisfied upon receipt of a usage status request from the information processing device 11. Instead of the usage status of the mini app 28 by the user who has transmitted a usage status request, the usage status of the mini app 28 may be the usage status of the mini app 28 by all users.

In this manner, the service server 12 is configured to manage the usage status of the mini app 28 by a user. The service server 12 is configured to transmit the usage status of the mini app 28 to the information processing device 11.

### App Display Screen

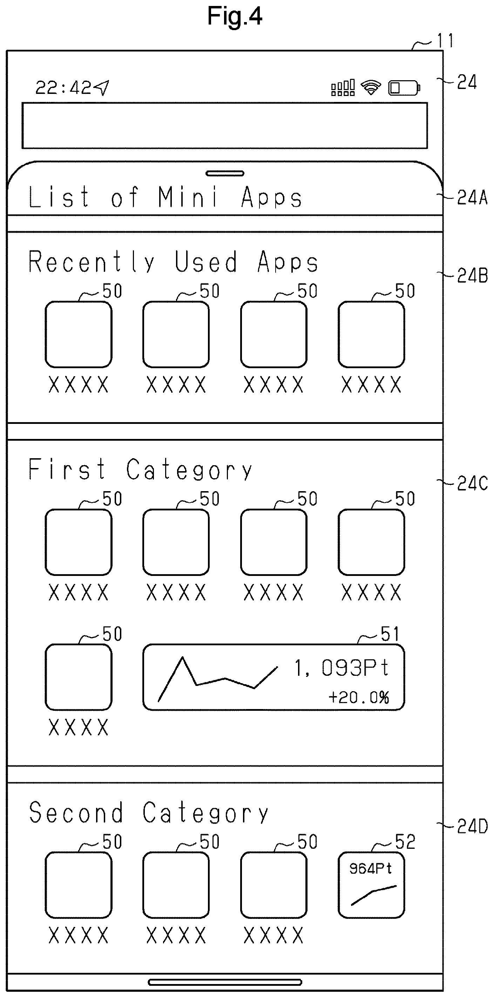

The app display screen displayed on the display device 24 of the information processing device 11 will now be described with reference to Fig. 4.

As shown in Fig. 4, the display device 24 displays an image related to the super app 27 that has been launched. The display device 24 includes a display area 24A in which an image is displayable in the super app 27.

The display area 24A displays multiple icons 50. In the display area 24A, a predetermined number of icons 50 are displayable in its width direction. The predetermined number may be, for example, four.

Each icon 50 corresponds to a mini app 28 that runs on the super app 27 as a platform. Each icon 50 is uniquely associated with a corresponding mini app 28. The icon 50 is a symbol indicating the associated mini app 28 by a character, a figure, or a combination thereof. When an icon 50 is designated by the user, the mini app 28 corresponding to the designated icon 50 is launched on the super app 27 as a platform.

The display area 24A may include a latest-use display area 24B and multiple category display areas 24C and 24D. In the latest-use display area 24B, an icon 50 with a relatively recent usage date and time is displayable. In the latest-use display area 24B, icons 50 are displayable in descending order of usage date and time.

In the category display areas 24C and 24D, icons 50 are displayable according to each category of the mini app 28. The category display areas 24C and 24D may include a first category display area 24C and a second category display area 24D. In the first category display area 24C, icons 50 assigned to a first category are displayable. In the second category display area 24D, icons 50 assigned to a second category are displayable.

In this manner, a first display area that displays icons 50 is assigned to the latest-use display area 24B. The first display area is assignable to each of the category display areas 24C and 24D.

The display area 24A may display usage status images 51 and 52. In particular, the category display areas 24C and 24D may respectively display the usage status images 51 and 52. Specifically, the first category display area 24C may display the usage status image 51. The second category display area 24D may display the usage status image 52.

The usage status images 51 and 52 are related to the usage status of the mini app 28 by the user. As described above, a second display area that displays the usage status image 51 or 52 is assignable to at least one of the category display areas 24C and 24D.

The usage status images 51 and 52 may be related to, for example, a usage reward value. The usage status images 51 and 52 may be, for example, a graph indicating changes in the usage reward value for each predetermined period.

The usage status images 51 and 52 are respectively related to the usage statuses of the mini apps 28 corresponding to the category display areas 24C and 24D. For example, the usage status image 51 is related to the usage status of the mini app 28 corresponding to the first category, which is assigned to the first category display area 24C. The usage status image 52 is related to the usage status of the mini app 28 corresponding to the second category, which is assigned to the second category display area 24D.

The usage status images 51 and 52 are displayed in an area in which no icons 50 are displayed. In the area in which icons 50 are displayable, the usage status images 51 and 52 are displayed in an area in which no icons 50 are displayed.

For each of the category display areas 24C and 24D, the displayed content of the corresponding one of the usage status images 51 and 52 varies depending on the display size of an area in which icons 50 are not displayed. For each of the category display areas 24C and 24D, the displayed content of the corresponding one of the usage status images 51 and 52 varies depending on the number of icons 50 that are not displayed.

For example, five icons 50 are displayed in the first category display area 24C. In this case, the usage status image 51 is displayed as the displayed content corresponding to the space for three icons 50, which are not displayed.

In this case, the usage status image 51 includes an image indicating a usage reward value and an image indicating the increase rate of the usage reward value. The usage status image 51 includes a graph indicating changes in the usage reward value for six predetermined periods from the present.

Three icons 50 are displayed in the second category display area 24D. In this case, the usage status image 52 is displayed as the displayed content corresponding to the space for one icon 50, which is not displayed.

In this case, the usage status image 52 includes an image indicating a usage reward value and does not include an image indicating the increase rate of the usage reward value. The usage status image 52 includes a graph indicating changes in the usage reward value for two predetermined periods from the present.

Thus, in the category display areas 24C and 24D, the usage status image 51 with a larger size is displayed when the display size of the second display area is relatively large as compared to when the display size of the second display area is relatively small. In the category display areas 24C and 24D, the usage status image 51 with more detailed content is displayed when the display size of the second display area is relatively large as compared to when the display size of the second display area is relatively small.

### App Display Control Process

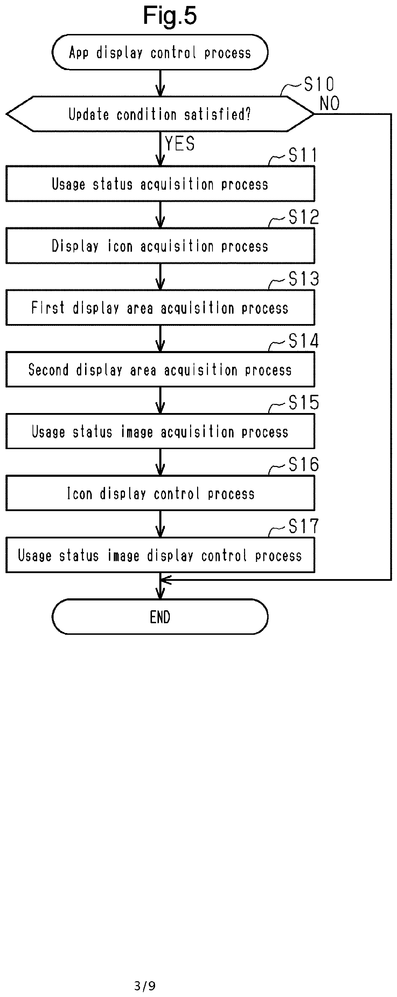

An app display control process will now be described with reference to Fig. 5. The app display control process is executed by the processor 20 in each predetermined cycle.

As shown in Fig. 5, in step S10, the processor 20 determines whether an update condition is satisfied. The update condition is used to update the displayed content corresponding to a mini app 28 in the super app 27. The update condition is satisfied when the super app 27 is launched. The update condition may be satisfied when the super app 27 is launched after a predetermined date and time. The update condition may be satisfied at a predetermined date and time in a state in which the super app 27 is launched. The predetermined date and time may be from 12:00 a.m. onward, including 12:00 p.m., or may be 12:00 a.m. on Sunday. The update condition may be satisfied in response to a user's instruction.

When determining that the update condition is not satisfied, the processor 20 ends the app display control process. When determining that the update condition is satisfied, the processor 20 shifts the process to step S11.

In step S11, the processor 20 executes a usage status acquisition process. In this process, the processor 20 acquires the usage status of the mini app 28. **In** particular, the processor 20 acquires the usage status of the mini app 28 from the service server 12 by transmitting a usage status request to the service server 12. The usage status request may include a user identifier and a request to provide the usage status of the mini app 28 by the user.

In particular, the processor 20 acquires the usage history of the mini app 28 as the usage status of the mini app 28. For example, the processor 20 may acquirethe usage frequency of the mini app 28 as the usage status of the mini app 28. The processor 20 may acquire, as the usage status of the mini app 28, the usage frequency of the mini app 28 for each of multiple predetermined periods from the present.

The processor 20 may acquire, as the usage status, a changed status of the reward value resulting from the use of the mini app 28. The processor 20 may acquire a usage reward value as the usage status. The processor 20 may acquire, as the usage status, a usage reward value for each of the predetermined periods from the present. The processor 20 may acquire, as the usage status, the increase rate of a usage reward value. The processor 20 may acquire an acquired reward value as the usage status. The processor 20 may acquire, as the usage status, an acquired reward value for each predetermined period from the present. The processor 20 may acquire, as the usage status, the increase rate of an acquired reward value.

The processor 20 acquires, as the usage status of the mini app 28, the usage history of the mini app 28 corresponding to the user identifier. The processor 20 may acquire, as the usage status of the mini app 28, the usage history of the mini apps 28 corresponding to all the user identifiers. The processor 20 may acquire, as the usage status of the mini app 28, the usage history of the mini app 28 for each category.

In step S12, the processor 20 executes a display icon acquisition process. In this process, the processor 20 acquires, as the icon 50 to be displayed on the display device 24, the icon 50 corresponding to a mini app 28 running on the super app 27 as a platform. The processor 20 acquires the icon 50 corresponding to the mini app 28 by reading the icon 50 corresponding to the mini app 28 from the memory 21. The memory 21 stores data in which the mini app 28 running on the super app 27 as a platform, the category of the mini app 28, and the icon 50 corresponding to the mini app 28 are associated with each other.

Specifically, when using the mini app 28, the processor 20 stores, in the memory 21, the date and time at which the mini app 28 was used. This allows the processor 20 to acquire, from the memory 21, the mini app 28 most recently used.

The mini app 28 most recently used may be a mini app 28 with a relatively recent usage date and time when counted backward from the present. The mini app 28 most recently used may be a predetermined number of mini apps 28 sorted in descending order of usage date and time. The usage date and time may be the date and time of launch. The predetermined number may be the same as the number of icons 50 displayed in one row in the width direction on the display device 24. For example, when the number of icons 50 to be displayed in one row in the width direction on the display device 24 is four, the predetermined number may be four.

The processor 20 acquires the mini app 28 assigned to each category from the memory 21. For example, the processor 20 acquires the mini app 28 corresponding to the first category. The processor 20 acquires the mini app 28 corresponding to the second category. The processor 20 acquires the icon 50 corresponding to the mini app 28 assigned to each category from the memory 21.

In step S13, the processor 20 executes a first display area acquisition process. In this process, the processor 20 acquires the display size of the first display area. The first display area is assignable to the latest-use display area 24B and multiple category display areas 24C and 24D.

Based on the result acquired in step S12, the processor 20 acquires the number of icons 50 to be assigned to the latest-use display area 24B. **In** the present embodiment, the number of icons 50 assigned to the latest-use display area 24B may be four. In this case, the processor 20 acquires the display size of the first display area assigned to the latest-use display area 24B as the display size corresponding to the four icons 50.

Based on the result acquired in step S12, the processor 20 acquires the number of icons 50 assigned to each of the category display areas 24C and 24D. Based on the number of icons 50 assigned to each of the category display areas 24C and 24D, the processor 20 acquires the display size of the first display area assigned to each of the category display areas 24C and 24D.

When the number of icons 50 assigned to the first category display area 24C is five, the processor 20 acquires the display size of the first display area assigned to the first category display area 24C as a display size corresponding to the five icons 50.

When the number of icons 50 assigned to the second category display area 24D is three, the processor 20 acquires the display size of the first display area assigned to the second category display area 24D as a display size corresponding to the three icons 50.

In step S14, the processor 20 executes a second display area acquisition process. In this process, the processor 20 acquires the display size of the second display area. The second display area is assignable to each of the category display areas 24C and 24D.

Based on the result acquired in step S12 and the display size of the first display area acquired in step S13, the processor 20 acquires the display size of the second display area assigned to each of the category display areas 24C and 24D. Specifically, the processor 20 assigns, as the second display area, an area to which the first display area is not assigned in each of the category display areas 24C and 24D. The processor 20 acquires the display size assigned as the second display area in each of the category display areas 24C and 24D.

For the display sizes corresponding to eight icons 50, five icons 50 are displayed and three icons 50 are not displayed in the first category display area 24. In such a case, when the number of icons 50 assigned to the first category display area 24C is five, the processor 20 acquires the display size of the second display area assigned to the first category display area 24C as a display size corresponding to the three icons 50.

For the display size corresponding to four icons 50, three icons 50 are displayed and one icon 50 is not displayed in the second category display area 24D. In such a case, when the number of icons 50 assigned to the second category display area 24D is three, the processor 20 acquires the display size of the second display area assigned to the second category display area 24D as a display size corresponding to one icon 50.

When four icons 50 are displayed in the second category display area 24D for the display size corresponding to four icons 50, the processor 20 does not need to assign the second display area to the second category display area 24D.

In step S15, the processor 20 executes a usage status image acquisition process. In this process, the processor 20 generates the usage status images 51 and 52 based on the usage status acquired in step S11 and the display size of the second display area acquired in step S14. This causes the processor 20 to acquire the usage status images 51 and 52.

The processor 20 generates, for each category, the corresponding usage status image 51 or 52 to which the category is assigned, based on the usage status of the mini app 28 to which the category is assigned. Specifically, the processor 20 generates the usage status image 51 to which the first category is assigned, based on the usage status of the mini app 28 to which the first category is assigned. The processor 20 generates the usage status image 52 to which the second category is assigned, based on the usage status of the mini app 28 to which the second category is assigned.

The processor 20 generates different usage status images 51 and 52 depending on whether the display size of the second display area is a first display size or a second display size, the second display size being larger than the first display size. In particular, when the display size of the second display area is the second display size, the processor 20 generates the usage status image 51 having a display size larger than that when the display size of the second display area is the first display size. When the display size of the second display area is the second display size, the processor 20 generates the usage status image 51 having more detailed content than that when the display size of the second display area is the first display size.

For example, when the display size of the second display area in the first category display area 24C is sized so as to allow three icons 50 to be displayed, the processor 20 generates the usage status image 51 for the usage status of the first category. The usage status image 51 includes an image indicating the usage reward value of the mini app 28 assigned to the first category, an image indicating the increase rate of the usage reward value, and a graph indicating changes in the usage reward value for six predetermined periods.

When the display size of the second display area in the second category display area 24D is sized so as to allow one icon 50 to be displayed, the processor 20 generates the usage status image 52 for the usage status of the second category. The usage status image 52 includes an image indicating the usage reward value of the mini app 28 assigned to the second category, and a graph indicating changes in the usage reward value for two predetermined periods.

In step S16, the processor 20 executes an icon display control process. In this process, the processor 20 displays the icon 50 acquired in step S12 in the first display area. Thus, the processor 20 displays the icon 50 associated with the mini app 28 in the first display area.

Specifically, the processor 20 displays the icon 50 corresponding to the most-recently used mini app 28 acquired in step S12 in the latest-use display area 24B. The processor 20 displays the icon 50 corresponding to the mini app 28 acquired in step S12 in the category display areas 24C and 24D corresponding to the categories assigned to the mini app 28.

In step S17, the processor 20 executes a usage status image display control process. In this process, the processor 20 displays the usage status images 51 and 52 acquired in step S15 in the second display areas. Thus, the processor 20 displays the usage status images 51 and 52 in the second display areas, based on the usage status of the mini app 28.

In particular, the processor 20 displays, in the second display area of the first category display area 24C, the usage status image 51 to which the first category is assigned. The processor 20 displays, in the second display area of the second category display area 24D, the usage status image 52 to which the second category is assigned. Thus, the processor 20 respectively displays, in the second display areas of the category display areas 24C and 24D, the usage status images 51 and 52 acquired in step S15.

Specifically, the processor 20 displays different usage status images 51 and 52 depending on whether the display size of the second display area is the first display size or the second display size, which is larger than the first display size. When the display size of the second display area is the second display size, the processor 20 displays the usage status image 51 having a display size larger than that when the display size of the second display area is the first display size. When the display size of the second display area is the second display size, the processor 20 displays the usage status image 51 having more detailed content than that when the display size of the second display area is the first display size.

### Operation and Advantage of First Embodiment

The operation and advantages of the first embodiment will now be described.

(1-1) The processor 20 displays the icon 50 associated with a mini app 28 in the first display area of the display area 24A, in which an image is displayable in the super app 27. Based on the usage status of the mini app 28, the processor 20 displays the usage status images 51 and 52 related to the usage status of the mini app 28 in the second display areas, in which no icons 50 are displayed, of the display area 24A. This configuration allows the user to readily identify the usage status of the mini app 28 by viewing the usage status images 51 and 52. Thus, usability is improved.

(1-2) The processor 20 displays different usage status images 51 and 52 depending on whether the display size of the second display area is the first display size or the second display size. This configuration allows the displayed usage status images 51 and 52 to be diversified depending on the display size of the second display area. Thus, usability is improved.

(1-3) When the display size of the second display area is the second display size, the processor 20 displays the usage status image 51 having a display size larger than that when the display size of the second display area is the first display size. In this configuration, when the display size of the second display area is the second display size, which is larger than the first display size, the usage status image 51 is displayed in a larger display size. Thus, usability is improved.

(1-4) When the display size of the second display area is the second display size, the processor 20 displays the usage status image 51 having more detailed content than that when the display size of the second display area is the first display size. In this configuration, when the display size of the second display area is the second display size, which is larger than the first display size, the usage status image 51 is displayed with more detailed content. Thus, usability is improved.

(1-5) The processor 20 acquires, as the usage status, the usage history of the user related to a mini app 28. This configuration allows the user to readily identify, as the usage status of the mini app 28, the usage history of the mini app 28 by viewing the usage status images 51 and 52. Thus, usability is improved.

(1-6) The processor 20 acquires, as the usage status, the usage frequency of a mini app 28 by the user. This configuration allows the user to readily identify, as the usage status of the mini app 28, the usage frequency of the mini app 28 by viewing the usage status images 51 and 52. Thus, usability is improved.

(1-7) The processor 20 acquires, as the usage status, a changed status of the reward value resulting from the use of a mini app 28. This configuration allows the user to readily identify, as the usage status of the mini app 28, the changed status of the reward value by viewing the usage status images 51 and 52. Thus, usability is improved.

(1-8) The display area 24A includes multiple category display areas 24C and 24D, in which icons 50 are displayable according to each category assigned to the mini app 28. The first display area is assignable to each of the category display areas 24C and 24D. This configuration allows the user to visually recognize the icons 50 corresponding to the mini apps 28 respectively assigned to the category display areas 24C and 24D. Thus, usability is improved.

(1-9) The second display area includes an area in which icons 50 are displayable but are not displayed. The first display area and the second display area are assignable to each of the category display areas 24C and 24D. This configuration allows the user to visually recognize the usage status images 51 and 52 while visually recognizing the icons 50 corresponding to the mini apps 28 respectively assigned to the category display areas 24C and 24D. Thus, usability is improved.

(1-10) When the second display area is assigned to the first category display area 24C, the processor 20 displays, in the second display area, the usage status image 51 related to the usage status of a mini app 28 to which the first category corresponding to the first category display area 24C is assigned. This configuration allows the user to visually recognize the usage status image 51 of the mini app 28 assigned to the first category display area 24C while visually recognizing the icon 50 corresponding to the mini app 28 assigned to the first category display area 24C. Thus, usability is improved.

### Second Embodiment

A second embodiment will now be described below. In the description below, the same reference numerals are given to those components that are the same as the corresponding components of the above-described embodiment. Such elements will not be described or will be briefly described.

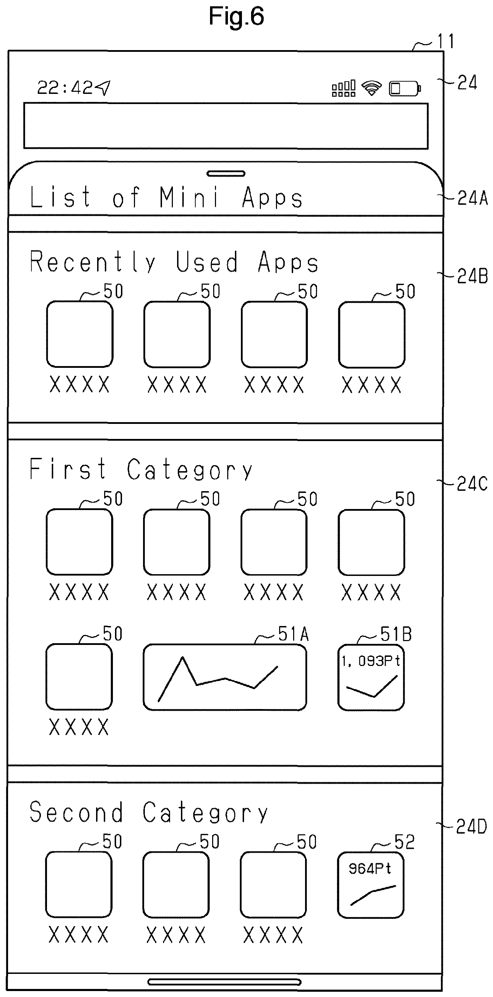

Referring to Fig. 6, in the second embodiment, multiple usage status images 24C and 24D may be displayed in each of multiple category display areas 51A, 51B, and 52. The number of the usage status images 51A, 51B, and 52 may be different between multiple category display areas 24C and 24D. The number of the usage status images 51A, 51B, and 52 may be different between the first category display area 24C and the second category display area 24D.

In the first category display area 24C, the display size of the second display area is larger than that of the second category display area 24D. For example, the first category display area 24C display two usage status images 51A and 51B. For example, the second category display area 24D displays one usage status image 52. In the first category display area 24C, the display size of the second display area is larger than that of the second category display area 24D, and a larger number of usage status images 51A and 51B may be displayed.

The usage status image 51A may include, for example, a graph indicating changes in the usage reward value for six predetermined periods assigned to the first category. The usage status image 51B may include, for example, an image indicating the usage reward value of a mini app 28 assigned to the first category, and a graph indicating changes in the usage reward value for two predetermined periods.

In step S15 of Fig. 5, the processor 20 determines the number of the usage status images 51A, 51B, and 52 based on the display size of the second display area. When the display size of the second display area is the second display size, the processor 20 determines a larger number of the usage status images 51A, 51B, and 52 than that when the display size of the second display area is the first display size. The processor 20 generates the usage status images 51A, 51B, and 52 corresponding to the determined number of the usage status images 51A, 51B, and 52.

In step S17, when the display size of the second display area is the second display size, the processor 20 displays a larger number of usage status images 51A, 51B, and 52 than when the display size of the second display area is the first display size, which is smaller than the second display size.

### Operation and Advantages of Second Embodiment

The operation and advantages of the second embodiment will now be described.

(2-1) When the display size of the second display area is the second display size, the processor 20 displays a larger number of usage status images 51A, 51B, and 52 than that when the display size of the second display area is the first display size. In this configuration, when the display size of the second display area is the second display size, which is larger than the first display size, a larger number of usage status images 51A, 51B, and 52 is displayed. Thus, usability is improved.

### Third Embodiment

A third embodiment will now be described.

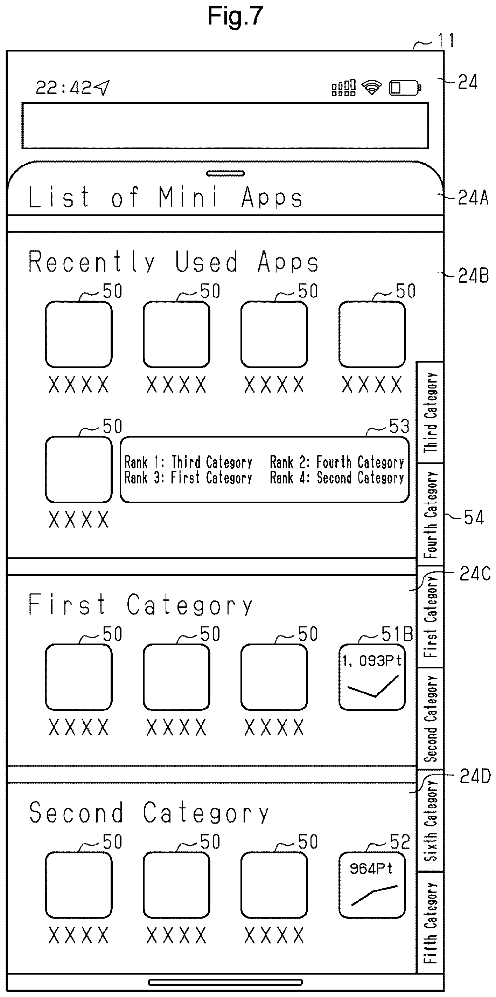

Referring to Fig. 7, in the third embodiment, the second display area may be assignable to the latest-use display area 24B. The latest-use display area 24B displays five icons 50. The area that displays five icons 50 is assigned as the first display area.

In the latest-use display area 24B, a usage status image 53 is displayed in an area sized to allow three icons 50 to be displayed. The area that is sized to allow three icons 50 to be displayed but is displaying no icons 50 is assigned as the second display area.

The usage status image 53 is related to the usage ranking of categories. The usage ranking of categories is a ranking of the number of times a mini app 28 has been used by the user for each category, and may be, for example, a ranking of a usage reward value for each category.

The display area 24A displays a category display image 54. The category display image 54 extends vertically, and is displayed in an end area of the display area 24A in the width direction. The category display image 54 may extend in the width direction, and may be displayed in an end area at a lower part of the display area 24A.

The category display image 54 includes multiple operation areas respectively corresponding to the category display areas 24C and 24D. When any one of the operation areas is operated, an area corresponding to the operated operation area of the category display areas 24C and 24D is displayed.

The operation areas may be displayed in an order according to the usage ranking of categories as the usage status of the mini app 28. The operation areas are displayed in top-to-bottom order such that categories with higher usage rankings appear above those with lower usage rankings.

Accordingly, the user operates the operation area corresponding to the usage ranking while visually recognizing the usage status image 53. As a result, the icons 50 and the usage status images 51 and 52 assigned to the category desired by the user are displayed.

In step S13, the processor 20 acquires the number of icons 50 assigned to the latest-use display area 24B, based on the result acquired in step S12. The number of icons 50 assigned to the latest-use display area 24B may be smaller than the number of icons 50 that can be displayed in the latest-use display area 24B by a predetermined number. The predetermined number may be three, for example. Based on the number of icons 50 assigned to the latest-use display area 24B, the processor 20 acquires the display size of the first display area assigned to the latest-use display area 24B.

In step S14, the processor 20 assigns, as the second display area, an area to which the first display area is not assigned in the latest-use display area 24B. The processor 20 acquires the display size assigned as the second display area in the latest-use display area 24B.

In step S15, the processor 20 generates the usage status image 53 in which the display size of the second display area in the latest-use display area 24B is sized to allow three icons 50 to be displayed and which is displayed in the second display area corresponding to the three icons 50. The usage status image 53 may indicate a category with a higher usage ranking. In step S17, the processor 20 displays the usage status image 53 in the second display area of the latest-use display area 24B.

Operation and Advantages of Third Embodiment

The operation and advantages of the third embodiment will now be described.

(3-1) The display area 24A includes the latest-use display area 24B, in which the icon 50 associated with a function with a relatively recent usage date and time is displayable. This configuration allows the user to visually recognize the usage status image 53 while visually recognizing the icon 50 corresponding to a mini app 28 assigned to the latest-use display area 24B. Thus, usability is improved.

(3-2) The latest-use display area 24B displays the usage status image 53 of the mini app 28 for each category. This configuration allows the user to visually recognize the usage status image 53 of the mini app 28 for each category while visually recognizing the icon 50 corresponding to a mini app 28 assigned to the latest-use display area 24B. Thus, usability is improved.

Fourth Embodiment

A fourth embodiment will now be described.

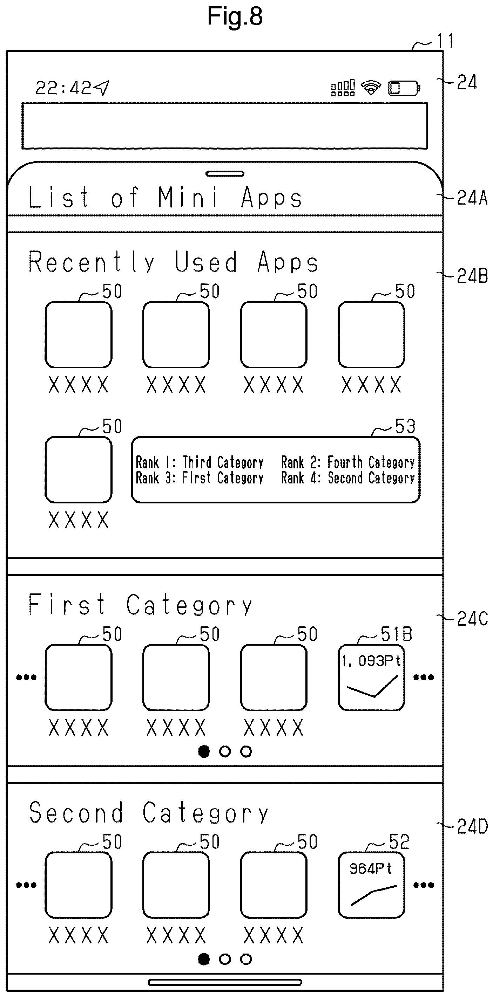

As shown in Fig. 8, in the fourth embodiment, the icons 50 displayed in each of the category display areas 24C and 24D may be displayed so as to slide in response to a slide operation. In the same manner as the icons 50, the usage status images 51B and 52 respectively displayed in the category display areas 24C and 24D may be displayed so as to slide in response to a slide operation.

Operation and Advantages of Fourth Embodiment

The operation and advantages of the fourth embodiment will now be described.

(4-1) The processor 20 causes the icons 50 and the usage status images 51B and 52 to be displayed so as to slide in the category display areas 24C and 24D in response to an instruction from the user. This configuration allows the user to visually recognize the usage status images 51B and 52 while visually recognizing the icons 50 as intended. Thus, usability is improved.

Fifth Embodiment

A fifth embodiment will now be described.

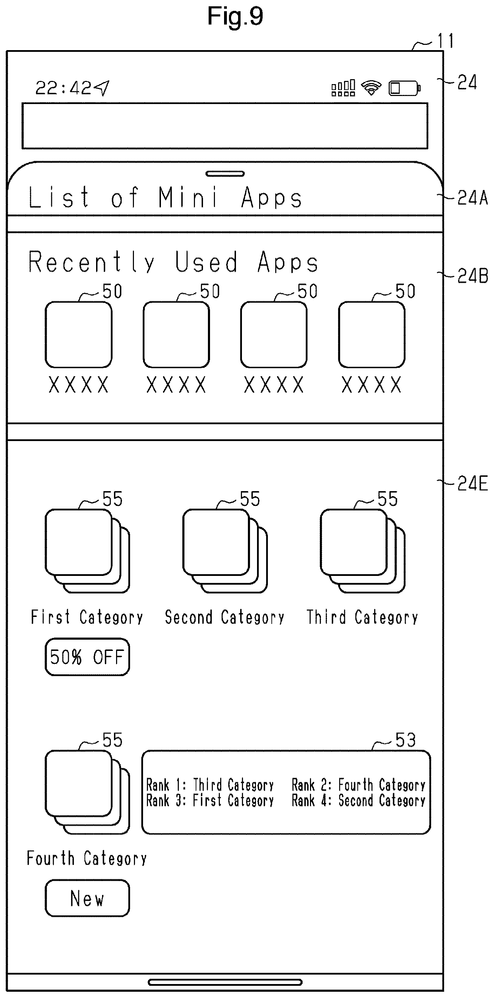

As shown in Fig. 9, in the fifth embodiment, at least one folder icon 55 is displayable in the first display area. For example, folder icons 55 are displayable in an icon display area 24E. The first display area is assigned to the icon display area 24E.

Multiple icons 50 are collectively associated with a single folder icon 55. Multiple folder icons 55 are assigned for each category. Instead, the folder icons 55 may be assigned in any combination.

The area corresponding to a folder icon 55 displays an image related to the folder icon 55. Examples of the image related to a folder icon 55 may include an image indicating that there is a mini app 28 that offers a campaign, such as a 50% discount. Examples of the image related to a folder icon 55 may include an image indicating that there is a new mini app 28.

The area in which folder icons 55 are displayable allows the usage status image 53 to be displayed in the second display area, where no folder icons 55 are displayed. Thus, the second display area is assigned to the icon display area 24E.

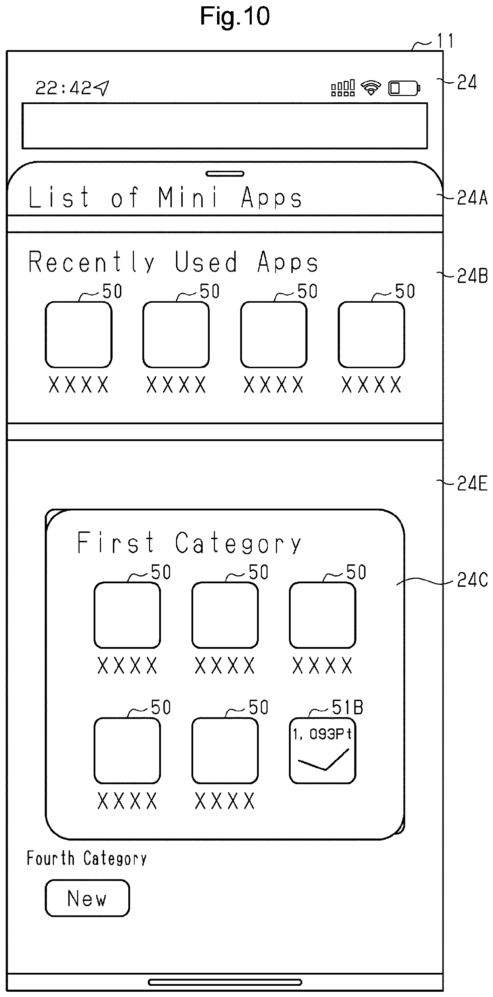

As shown in Fig. 10, when the folder icon 55 corresponding to the first category is operated, the first category display area 24C corresponding to the first category is displayed. In the first category display area 24C, multiple icons 50 corresponding to the first category and the usage status image 51B are displayable.

In this manner, the processor 20 displays a folder icon 55 associated with multiple mini apps 28 in the first display area. The processor 20 displays multiple icons 50 in response to an instruction from the user in a state in which the mini apps 28 are associated with the folder icon 55.

### Operation and Advantages of Fifth Embodiment

The operation and advantages of the fifth embodiment will now be described.

(5-1) The processor 20 displays, in the first display area, multiple icons 50 respectively associated with multiple mini apps 28 in response to an instruction from the user in a state in which the icons 50 are associated with one folder icon 55. In this configuration, multiple icons 50 are aggregated into a single folder icon 55. This provides a display area in which other images are displayable. In addition, the user visually recognizes the icons 50 as intended. Thus, usability is improved.

(5-2) The first display area, in which folder icons 55 are displayed, and the second display area, in which the usage status image 53 is displayed, are assigned to the icon display area 24E. This configuration allows the user to visually recognize the usage status image 53 while visually recognizing the folder icons 55 in the icon display area 24E. Thus, usability is improved.

### Sixth Embodiment

A sixth embodiment will now be described.

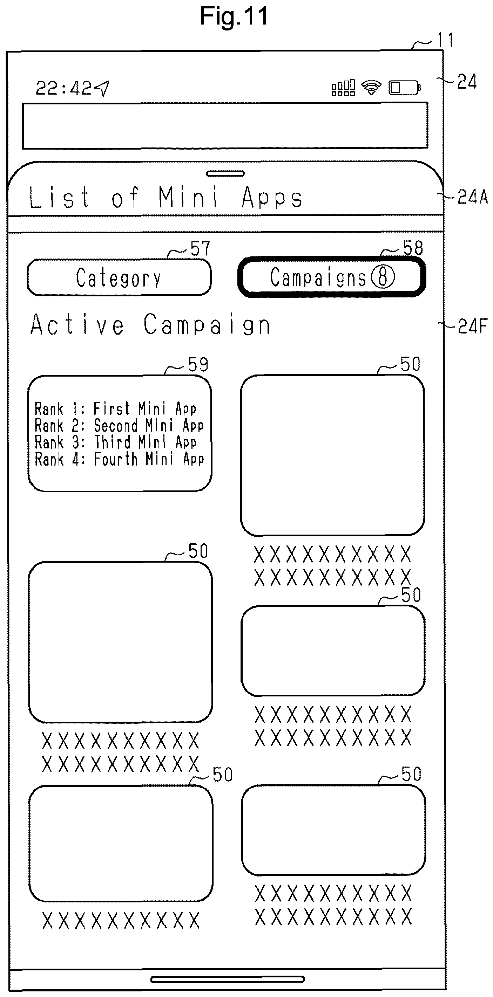

Referring to Fig. 11, in the sixth embodiment, one or more campaign images are displayable in the display area 24A. The campaign image displays the icon 50 corresponding to a mini app 28 to which an advertisement for a currently running campaign is provided. The advertisement is provided based on an instruction from an advertisement provider who is the advertiser. The advertisement is registered in the memory 31 in response to an instruction from the advertisement provider in the service server 12.

The display area 24A includes an advertisement display area 24F. The advertisement display area 24F displays a campaign image. That is, the icons 50 to which advertisements are respectively provided are displayable in the advertisement display area 24F.

In the advertisement display area 24F, a predetermined number of icons 50 are displayable in the width direction. The predetermined number may be, for example, two. The number of icons 50 displayable in the width direction may be smaller in the advertisement display area 24F than that in the latest-use display area 24B and multiple category display areas 24C and 24D.

The advertisement display area 24F displays a usage status image 59 in an area that is displaying no icons 50. The usage status image 59 may include a ranking of mini apps 28 associated with ongoing campaigns based on the number of launches. Thus, the first display area and the second display area are assignable to the advertisement display area 24F.

The display area 24A displays a category switching image 57 and a campaign switching image 58. When the category switching image 57 is designated, the processor 20 displays a category image as shown in Fig. 4 in the display area 24A. When the campaign switching image 58 is designated, the processor 20 displays a campaign image as shown in Fig. 11 in the display area 24A. Thus, the display mode of the advertisement display area 24F is switchable according to an instruction from the user.

### Operations and Advantages of Sixth Embodiment

The operation and advantages of the sixth embodiment will now be described.

(6-1) The display area 24A includes the advertisement display area 24F. In the advertisement display area 24F, the icon 50 associated with a mini app 28 to which an advertisement is provided is displayable. The first display area and the second display area are assignable to the advertisement display area 24F. This configuration allows the user to visually recognize the usage status image 59 while visually recognizing the icon 50 corresponding to the mini app 28 provided in response to an instruction from the advertisement provider in the advertisement display area 24F. Thus, usability is improved.

(6-2) The display mode of the advertisement display area 24F is switchable according to an instruction from the user. This configuration allows the user to switch the display mode of the advertisement display area 24F as intended. Thus, usability is improved.

### Seventh Embodiment

A seventh embodiment will now be described.

In the seventh embodiment, in step S12 of Fig. 5, the processor 20 may acquire up to a predetermined number of icons 50 to be displayed in the display area 24A. Specifically, the processor 20 reads, from the memory 21, the predetermined number corresponding to each of the category display areas 24C and 24D. Up to the predetermined number of icons 50 to be displayed in each of the category display areas 24C and 24D may be acquired.

The predetermined number may be smaller than the number of icons 50 corresponding to an area in which they are displayable. For example, when four icons 50 are displayable in the second category display area 24D, the predetermined number may be three. For example, when eight icons 50 are displayable in the first category display area 24C, the predetermined number may be seven.

In step S14, the processor 20 assigns, as the second display area, an area in which icons 50 are displayable but are not actually displayed in the display area 24A. In this manner, the processor 20 acquires up to the predetermined number of icons 50 in the first display area such that the second display area is assigned to the display area 24A.

In step S16, the processor 20 displays up to the predetermined number of icons 50 in the first display area such that the second display area is assigned to the display area 24A. In step S17, the processor 20 displays, in the second display area, the usage status images 51 and 52 corresponding to the display size of the second display area.

### Operation and Advantages of Seventh Embodiment

The operations and advantages of the embodiment will now be described.

(7-1) The processor 20 displays up to the predetermined number of icons 50 in the first display area such that the second display area is assigned to the display area 24A. In this configuration, the number of icons 50 to be displayed in the first display area is adjustable so as to display the usage status images 51, 51A, 51B, 52, 53, and 59 in the second display area. This allows the user to readily identify the usage statuses of the mini apps 28 by visually recognizing the usage status images 51, 51A, 51B, 52, 53, and 59. Thus, usability is improved.

### Modifications

The above-described embodiments may be modified as described below. The above-described embodiments and the following modifications can be combined if the combined modifications remain technically consistent with each other.

The processor 20 may execute various processes in any order in the app display control process. For example, the processor 20 may execute step S12 after executing any one of steps S11 to S14 in the app display control process.

The processor 20 may display at least one of the latest-use display area 24B, multiple category display areas 24C and 24D, and the advertisement display area 24F in the display area 24A. The processor 20 may display at least one of the latest-use display area 24B, the icon display area 24E, and the advertisement display area 24F in the display area 24A.

The usage status of a mini app 28 may be an acquired reward value. The usage status of a mini app 28 may be based on at least one of a limited-time reward value and an unlimited-time reward value. That is, the usage status of a mini app 28 may be an acquired reward value of the limited-time reward value or an acquired reward value of the unlimited-time reward value.

The usage status of a mini app 28 may be any status that can be acquired based on the usage history of the mini app 28 by the user. The usage status of a mini app 28 may be the usage status of all the mini apps 28 included in the category assigned to the mini apps 28. The usage status of a mini app 28 may be the usage status of all the mini apps 28 regardless of the assigned category.

The processor 20 may acquire the usage status of a mini app 28 by a user other than the user who has transmitted a usage status request. The processor 20 may display the usage status images 51, 51A, 51B, 52, 53, and 59 based on the usage status of a mini app 28 by the user who has transmitted the usage status request and another user.

In the above-described embodiments, the processor 20 displays various usage status images 51, 51A, 51B, 52, 53, and 59. Instead, the processor 20 may display a combination including at least one of the usage status images 51, 51A, 51B, 52, 53, and 59.

The processor 20 may vary at least one of the display size, the number, and the degree of details of the content of the usage status images 51, 51A, 51B, 52, 53, and 59 according to the display size of the second display area.

Even when the display size of the second display area varies, the processor 20 may display the usage status images 51, 51A, 51B, 52, 53, and 59 in the same display mode depending on the display size of the second display area. Regardless of the display size of the second display area, the processor 20 may display the usage status images 51, 51A, 51B, 52, 53, and 59 in a constant display size.

The processor 20 may display the usage status images 51, 51A, 51B, 52, 53, and 59 using, as the second display area, in an area in which no icons 50 are displayed in the display area 24A.

The processor 20 may display the detailed data of the usage status of a mini app 28 in the display area 24A when the user designates the usage status image 51, 51A, 51B, 52, 53, or 59. The processor 20 may launch a mini app 28 related to the usage status image 51, 51A, 51B, 52, 53, or 59 when the user designates the usage status image 51, 51A, 51B, 52, 53, or 59. The processor 20 may access a website related to the usage status image 51, 51A, 51B, 52, 53, or 59 when the user designates the usage status image 51, 51A, 51B, 52, 53, or 59.

The icon 50 corresponding to a mini app 28 may be stored in the memory 31. In this case, the processor 20 transmits a request for providing the icon 50 to the service server 12. In the service server 12, upon receiving the request to provide the icon 50, the processor 30 transmits the icon 50 corresponding to the mini app 28 to the information processing device 11. The processor 20 may acquire the icon 50 corresponding to the mini app 28 by receiving the icon 50 corresponding to the mini app 28 from the service server 12.

In the service server 12, the processor 30 may determine whether to display multiple icons 50 respectively corresponding to multiple mini apps 28, based on the usage statuses of the mini apps 28 by the user. The processor 30 may transmit the icons 50 to be displayed to the information processing device 11.

In the service server 12, the processor 30 may determine the display order of multiple icons 50 respectively corresponding to multiple mini apps 28, based on the usage statuses of the mini apps 28 by the user. The processor 30 may transmit the display order of the icons 50 to the information processing device 11.

In the information processing device 11, the processor 20 may transmit the display size of the second display area to the service server 12. The usage status request may include the display size of the second display area. In such a case, in the service server 12, the processor 30 may generate the usage status images 51, 51A, 51B, 52, 53, and 59 based on the usage statuses of mini apps 28 and the display size of the second display area. The processor 30 may transmit the generated usage status images 51, 51A, 51B, 52, 53, and 59 to the information processing device 11. Thus, the processor 20 may acquire the usage status images 51, 51A, 51B, 52, 53, and 59.

The processor 20 may store the usage status of a mini app 28 in the memory 21. In such a case, the processor 20 may acquire the usage status of the mini app 28 stored in the memory 21. The processor 20 may acquire the usage status of the mini app 28 from the service server 12, and may acquire the usage status of the mini app 28 stored in the memory 21.

The super app 27 may be an app on which one or more mini apps 28 run as a platform. That is, the super app 27 may be an app on which at least one mini app 28 runs as a platform.

The mini app 28 may simply be software having a predetermined function. That is, the super app 27 may be an app that simply provides a function, and the mini app 28 may be a function in the app.

The information processing system 10 may include another server in addition to the service server 12. In this case, the other server may include some of the functions of the service server 12. The information processing system 10 may have any server configuration including one or more servers if it functions as the service server 12.

The service server 12 may include some of the functions of the information processing device 11. The service server 12 may include some of the functions of the information processing device 11 except for the display function of the information processing device 11. As a result, the service server 12 performs control to display an image on a user terminal device. In such a case, the service server 12 may function as an information processing device.

The information processing device 11 may have some of the functions of the service server 12. The information processing device 11 may have all the functions of the service server 12. In this case, the information processing system 10 does not have to include the service server 12.

The information processing device 11 simply needs to be configured to include at least one processor 20 and at least one memory 21. The information processing system 10 simply needs to be configured to include at least one processor, such as the processor 20 or 30, and at least one memory, such as the memory 21 or 31.

The expression "at least any" as used herein means "one or multiple" of desired options. As an example, the phrase "at least any" as used herein means only one option if the number of options is two, or both of the two options. As another example, the expression "at least any" used herein means only one option or a combination of any two or more options if the number of options is three or more.

### Clauses

Technical concepts that can be understood from each of the above embodiments and modifications will now be described.

[Clause 1] An information processing device, including:
at least one memory configured to store a program; and
at least one processor configured to run the program to execute a process, where
the at least one processor is configured to execute:
   displaying an icon associated with at least one function in a first display area of a display area in an app that provides the at least one function, where an image is displayable in the display area;
   acquiring a usage status of the at least one function; and
   displaying, based on the usage status of the at least one function, a usage status image in a second display area of the display area, where the usage status image is related to the usage status of the at least one function, and the icon is not displayed in the second display area.

[Clause 2] The information processing device according to clause 1, where
the at least one processor is configured to execute acquiring a display size of the second display area, and
the displaying the usage status image includes displaying a different usage status image depending on whether the display size of the second display area is a first display size or a second display size.

[Clause 3] The information processing device according to clause 2, where
in a case in which the second display size is larger than the first display size, the displaying the usage status image includes displaying a usage status image that has a larger display size when the display size of the second display area is the second display size as compared to when the display size of the second display area is the first display size.

[Clause 4] The information processing device according to clause 2 or 3, where
in a case in which the second display size is larger than the first display size, the displaying the usage status image includes displaying a usage status image that has more detailed content when the display size of the second display area is the second display size as compared to when the display size of the second display area is the first display size.

[Clause 5] The information processing device according to clause 2 or 4, where
in a case in which the second display size is larger than the first display size, the displaying the usage status image includes displaying a usage status image that has a larger number of usage status images when the display size of the second display area is the second display size as compared to when the display size of the second display area is the first display size.

[Clause 6] The information processing device according to any one of clauses 1 to 5, where
the acquiring the usage status of the at least one function includes acquiring, as the usage status, a usage history of a user related to the at least one function.

[Clause 7] The information processing device according to any one of clauses 1 to 6, where
the acquiring the usage status of the at least one function includes acquiring, as the usage status, a usage frequency of the user related to the at least one function.

[Clause 8] The information processing device according to any one of clauses 1 to 7, where
the acquiring the usage status of the at least one function includes acquiring, as the usage status, a changed status of a reward value resulting from use of the at least one function.

[Clause 9] The information processing device according to any one of clauses 1 to 8, where
the display area includes multiple category display areas, where an icon is displayable according to a category assigned to the at least one function in category display areas, and
the first display area is assignable to each of the category display areas.

[Clause 10] The information processing device according to clause 9, where
the second display area includes an area in which an icon is displayable but is not displayed, and
the first display area and the second display area are assignable to each of the category display areas.

[Clause 11] The information processing device according to clause 10, where
when the second display area is assigned to a first category display area of the category display areas, the displaying the usage status image includes displaying, in the second display area, a usage status image related to the usage status of the at least one function to which a first category is assigned, where the first category corresponds to the first category display area.

[Clause 12] The information processing device according to any one of clauses 1 to 11, where
the display area includes an advertisement display area, where an icon associated with a function to which an advertisement is provided is displayable in the advertisement display area, and
the first display area and the second display area are assignable to the advertisement display area.

[Clause 13] The information processing device according to clause 12, where
a display mode of the advertisement display area is switchable in accordance with an instruction from a user.

[Clause 14] The information processing device according to any one of clauses 1 to 13, where
the display area includes a latest-use display area, where an icon associated with a function with a relatively recent usage date and time is displayable in the latest-use display area.

[Clause 15] The information processing device according to any one of clauses 1 to 14, where
the displaying an icon includes displaying multiple icons respectively associated with multiple functions in accordance with an instruction from a user in a state in which the functions are associated with one of the icons in the first display area.

[Clause 16] The information processing device according to any one of clauses 1 to 15, where
the displaying an icon includes displaying up to a predetermined number of icons in the first display area such that the second display area is assigned to the display area.

[Clause 17] The information processing device according to any one of clauses 1 to 16, where
the app is a super app, and
the at least one function is at least one mini app.

[Clause 18] An information processing system, including:
at least one memory configured to store a program; and
at least one processor configured to run the program to execute a process, where
the at least one processor is configured to execute:
   displaying an icon associated with at least one function in a first display area of a display area in an app that provides the at least one function, where an image is displayable in the display area;
   acquiring a usage status of the at least one function; and displaying, based on the usage status of the at least one function, a usage status image in a second display area of the display area, where the usage status image is related to the usage status of the at least one function, and the icon is not displayed in the second display area.

[Clause 19] An information processing method, including:
displaying, by at least one processor, an icon associated with at least one function in a first display area of a display area in an app that provides the at least one function, where an image is displayable in the display area;
acquiring, by the at least one processor, a usage status of the at least one function; and
displaying, by the at least one processor, based on the usage status of the at least one function, a usage status image in a second display area of the display area, where the usage status image is related to the usage status of the at least one function, and the icon is not displayed in the second display area.

[Clause 20] A program configured to cause at least one processor to execute:
displaying an icon associated with at least one function in a first display area of a display area in an app that provides the at least one function, where an image is displayable in the display area;
acquiring a usage status of the at least one function; and
displaying based on the usage status of the at least one function, a usage status image in a second display area of the display area, where the usage status image is related to the usage status of the at least one function, and the icon is not displayed in the second display area.
Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An information processing system (10), comprising:
at least one memory (21) configured to store a program (26); and
at least one processor (20) configured to run the program (26) to execute a process, wherein
the at least one processor (20) is configured to execute:
displaying an icon (50) associated with at least one function in a first display area of a display area (24A) in an app that provides the at least one function, wherein an image is displayable in the display area;
acquiring a usage status of the at least one function; and
displaying, based on the usage status of the at least one function, a usage status image (51, 52) in a second display area of the display area (24A), wherein the usage status image (51, 52) is related to the usage status of the at least one function, and the icon (50) is not displayed in the second display area.

2. The information processing system (10) according to claim 1, wherein
the at least one processor (20) is configured to execute acquiring a display size of the second display area, and
the displaying the usage status image (51, 52) includes displaying a different usage status image (51, 52) depending on whether the display size of the second display area is a first display size or a second display size.

3. The information processing system (10) according to claim 2, wherein
in a case in which the second display size is larger than the first display size, the displaying the usage status image (51, 52) includes displaying a usage status image (51, 52) that has a larger display size, displaying a usage status image (51, 52) that has more detailed content, or displaying a usage status image (51, 52) that has a larger number of usage status images (51, 52) when the display size of the second display area is the second display size as compared to when the display size of the second display area is the first display size.

4. The information processing system (10) according to any one of claims 1 to 3, wherein
the acquiring the usage status of the at least one function includes:
acquiring, as the usage status, a usage history of a user related to the at least one function;
acquiring, as the usage status, a usage frequency of the user related to the at least one function; or
acquiring, as the usage status, a changed status of a reward value resulting from use of the at least one function.

5. The information processing system (10) according to any one of claims 1 to 4, wherein
the display area (24A) includes multiple category display areas (24C, 24D), wherein an icon (50) is displayable according to a category assigned to the at least one function in category display areas (24C, 24D), and
the first display area is assignable to each of the category display areas (24C, 24D).

6. The information processing system (10) according to claim 5, wherein
the second display area includes an area in which an icon (50) is displayable but is not displayed, and
the first display area and the second display area are assignable to each of the category display areas (24C, 24D).

7. The information processing system (10) according to claim 6, wherein
when the second display area is assigned to a first category display area (24C) of the category display areas (24C, 24D), the displaying the usage status image (51, 52) includes displaying, in the second display area, a usage status image (51, 52) related to the usage status of the at least one function to which a first category is assigned, wherein the first category corresponds to the first category display area (24C).

8. The information processing system (10) according to any one of claims 1 to 7, wherein
the display area (24A) includes an advertisement display area (24F), wherein an icon (50) associated with a function to which an advertisement is provided is displayable in the advertisement display area (24F), and
the first display area and the second display area are assignable to the advertisement display area (24F).

9. The information processing system (10) according to claim 8, wherein
a display mode of the advertisement display area (24F) is switchable in accordance with an instruction from a user.

10. The information processing system (10) according to any one of claims 1 to 9, wherein
the display area (24A) includes a latest-use display area (24B), wherein an icon (50) associated with a function with a relatively recent usage date and time is displayable in the latest-use display area (24B).

11. The information processing system (10) according to any one of claims 1 to 10, wherein
the displaying an icon (50) includes displaying multiple icons (50) respectively associated with multiple functions in accordance with an instruction from a user in a state in which the functions are associated with one of the icons (50) in the first display area.

12. The information processing system (10) according to any one of claims 1 to 11, wherein
the displaying an icon (50) includes displaying up to a predetermined number of icons (50) in the first display area such that the second display area is assigned to the display area (24A).

13. The information processing system (10) according to any one of claims 1 to 12, wherein
the app is a super app (27), and
the at least one function is at least one mini app (28).

14. An information processing method, comprising:
displaying, by at least one processor, an icon (50) associated with at least one function in a first display area of a display area (24A) in an app that provides the at least one function, wherein an image is displayable in the display area;
acquiring, by the at least one processor, a usage status of the at least one function; and
displaying, by the at least one processor, based on the usage status of the at least one function, a usage status image (51, 52) in a second display area of the display area (24A), wherein the usage status image (51, 52) is related to the usage status of the at least one function, and the icon (50) is not displayed in the second display area.

15. A program configured to cause at least one processor to execute:
displaying an icon (50) associated with at least one function in a first display area of a display area (24A) in an app that provides the at least one function, wherein an image is displayable in the display area;
acquiring a usage status of the at least one function; and
displaying based on the usage status of the at least one function, a usage status image (51, 52) in a second display area of the display area (24A), wherein the usage status image (51, 52) is related to the usage status of the at least one function, and the icon (50) is not displayed in the second display area.
